Europäisches Patentamt

European Patent Office

Office européen des brevets

(19)

(11) **EP 1 215 548 A2**

(12) **EUROPÄISCHE PATENTANMELDUNG**

(43) Veröffentlichungstag:
**19.06.2002 Patentblatt 2002/25**

(51) Int Cl.⁷: **G05B 19/042**

(21) Anmeldenummer: **01129663.9**

(22) Anmeldetag: **13.12.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **16.12.2000 DE 10062912**

(71) Anmelder: **Bühler Motor GmbH**
**90459 Nürnberg (DE)**

(72) Erfinder:
• **Bernreuth, Georg**
**90449 Nürnberg (DE)**
• **Stockfisch, Reiner**
**90768 Fürth (DE)**

(54) **Adressierung eines busgesteuerten Stellantriebs**

(57) Die Erfindung betrifft eine Adressierung für einen busgesteuerten Stellantrieb, der mit einer dem Stellantrieb zugeordneten Ansteuerelektronik zu einer Baueinheit zusammengefasst ist, und im Verbund mit weiteren busgesteuerten Stellantrieben über ein gemeinsames BUS-Protokoll kommunizieren kann, wobei in der Ansteuerelektronik ein Vergleich zwischen einer durch das BUS-Protokoll übermittelten BUS-Adresse mit einer hardwaremäßigen Voreinstellung vorgenommen wird und damit über eine Adressierungsmöglichkeit verfügt. Aufgabe der vorliegenden Erfindung ist es bei einem gattungsgemäßen busgesteuerten Stellantrieb für eine zuverlässige Adresscodierung zu sorgen, die einfach herstellbar ist und eine lange Lebensdauer gewährleistet. Diese Aufgabe wird erfindungsgemäß dadurch gelöst, dass in einem Gehäuseteil und/oder Stecker der Baueinheit zumindest eine Aussparung vorgesehen ist, die zumindest eine zerstörbare physikalische Verbindung zugänglich macht und/oder die Zerstörung ermöglicht.

Fig. 2

EP 1 215 548 A2

**Beschreibung**

Die Erfindung betrifft eine Adressierung für einen busgesteuerten Stellantrieb, der mit einer dem Stellantrieb zugeordneten Ansteuerelektronik zu einer Baueinheit zusammengefasst ist, und im Verbund mit weiteren busgesteuerten Stellantrieben über ein gemeinsames BUS-Protokoll kommunizieren kann, wobei in der Ansteuerelektronik ein Vergleich zwischen einer durch das BUS-Protokoll übermittelten BUS-Adresse mit einer hardwaremäßigen Voreinstellung vorgenommen wird und damit über eine Adressierungsmöglichkeit verfügt.

Derartige Stellantriebe werden z.B. für Heizungs-, Lüftungs-, und Umluftklappen in Klimaanlagen von Kraftfahrzeugen eingesetzt. Sie sind über ein Bus-System mit einem zentralen Bediengerät verbunden. Das Bus-System besteht in der Regel aus einer 3-adrigen Leitung. Sie enthält die Masseleitung, die Plus-Leitung zur Spannungsversorgung und die BUS-Leitung. Das BUS-System enthält in der Regel mehrere Stellantriebe. Jeder Stellantrieb beinhaltet einen anwenderspezifischen integrierten Schaltkreis kurz ASIC genannt. Das ASIC übernimmt die Ansteuerung sowie die komplette Überwachungslogik des Motors.

Die Adresscodierung der einzelnen Stellantriebe erfolgt hardwaremäßig über Adresspins, die entweder gegen Masse geschaltet sind oder offen bleiben. Die Anzahl der möglichen anzusteuernden Stellantriebe ist eine Funktion der Anzahl der Adresspins:

$$N(\text{Stellantriebe}) = 2^{(\text{Anzahl der Adresspins})}$$

Das über die Bus-Leitung gesendete Datenwort beinhaltet Daten-, Checksum-, und Adressbytes.

Der ASIC jedes der Stellantriebe vergleicht die über die Bus-Leitung erhaltenen Adressbytes mit den hardwaremäßig eingestellten Adressen. Ist eine Übereinstimmung zwischen beiden Adressinformationen vorhanden, wird die Ansteuerung des Motors aktiviert.

Gleichfalls kann die Adresskodierung der einzelnen Aktuatoren über eine bereits im ASIC abgelegten Adresse erfolgen. Der Vergleich der Adressen erfolgt dann zwischen der gespeicherten Adresse und der Adressinformation im Adressbyte des Datenwortes.

Die hardwaremäßige Einstellung der Adressen erfordert zusätzliche Chip-Fläche für die Leistungsendstufen zum Freibrennen von Oxidschichten die sich zwischen den Kontaktstellen im Betrieb bilden. Für die softwaremäßige Einstellung der Adressen wird ein $E^2$Prom benötigt. Dieses erfordert weitere Fertigungsprozesse.

Die existierenden Verfahren zur Hardware-Codierung von Klimabus-Stellantrieben sind durch die beschriebenen Zusatzmaßnahmen sehr aufwändig und bilden qualitative Schwachstellen die sich über die Lebensdauer negativ auf die Gesamtfunktion des Stellantriebs auswirken.

Aufgabe der vorliegenden Erfindung ist es daher bei einem gattungsgemäßen busgesteuerten Stellantrieb für eine zuverlässige Adresscodierung zu sorgen, die einfach herstellbar ist und eine lange Lebensdauer gewährleistet.

Diese Aufgabe wird erfindungsgemäß dadurch gelöst, dass in einem Gehäuseteil und/oder Stekker der Baueinheit zumindest eine Aussparung vorgesehen ist, die zumindest eine zerstörbare physikalische Verbindung zugänglich macht und/oder die Zerstörung ermöglicht. Bei einer innerhalb des Stellantriebsgehäuses oder einer Gehäusewandung angeordneten physikalischen Verbindung dient die Aussparung dazu die zu zerstörende Verbindung zugänglich zu machen, ist die physikalische Verbindung an der Außenseite der Wandung angeordnet, dient die Aussparung dazu die Zerstörung der physikalischen Verbindung zu ermöglichen bzw. wesentlich zu erleichtern. Die Aussparung ist dabei in Richtung auf das Gehäuseinnere im Anschluss an die physikalische Verbindung angeordnet. Durch die erfindungsgemäße Adresscodierung kann auf eine Adressspeicherung mittels $E^2$Prom verzichtet werden. Da die physikalische Verbindung keine Berührungskontakte enthält sind keine zusätzliche Maßnahmen, wie Freibrennen einer Oxydschicht notwendig um die Codierung aufrecht zu erhalten - dies erhöht die Zuverlässigkeit des Stellantriebs.

Weiterbildungen der Erfindung werden in den Unteransprüchen dargestellt.

Eine besonders vorteilhafte Möglichkeit die physikalische Verbindung zu zerstören besteht darin, dass der Aussparung zumindest ein Vorsprung zugeordnet ist, mit dessen Hilfe die physikalische Verbindung zerstörbar ist. Der Vorsprung kann z.B. Bestandteil einer Aufnahme der Baueinheit sein.

Zweckmäßigerweise ist der Vorsprung Bestandteil eines Gegensteckers ist und die physikalischen Verbindung in Steckrichtung des Gegensteckers und des Vorsprungs angeordnet ist. Hier ist die Codierung mit der Montage des Gegensteckers an den Stecker des Stellantriebs herstellbar.

Es ist auch denkbar dass der Vorsprung in einem ersten Gehäuseteil der Baueinheit und die Aussparung in dem zweiten Gehäuseteil anzuordnen oder umgekehrt. Hier wird die Codierung mit der Montage der beiden Gehäusehälften hergestellt.

Bei einer weiteren Ausführungsform der Erfindung ist ein zusätzliches Elektronikgehäuse vorgesehen, das an das Stellantriebsgehäuse montierbar ist. Der Vorsprung ist dabei Bestandteil des Elektronikgehäuses und die Aussparung Bestandteil des Stellantriebsgehäuses oder umgekehrt. Auch hier wird die Codierung mit einem Montagevorgang hergestellt der ohnehin notwendig ist, nämlich der Montage des Elektronikgehäuses an das Stellantriebsgehäuse.

Eine weitere Möglichkeit einen notwendigen Montageschritt für die Herstellung der Codierung zu nutzen besteht darin dass der Vorsprung Bestandteil eines Bauteils ist, an das die Stellantriebseinheit montierbar ist. Die Codierung erfolgt hierbei erst beim Einbau in die Stellgliedeinheit z.B. eine Kfz-Klimaanlage.

Die Codierung kann auch dadurch hergestellt werden, dass der Vorsprung Bestandteil eines zusätzlichen Bauteils ist, das zur Zerstörung der physikalischen Verbindung dient Diese Lösung wird insbesondere dann bevorzugt, wenn die Codierung im Fertigungsprozess häufig wechselt.

Zweckmäßig ist es die physikalische Verbindung als elektrisch leitfähige Verbindung auszubilden. Vorzugsweise ist hierbei eine Sollbruchstelle vorgesehen, um die physikalische Verbindung definiert unterbrechen zu können.

Die physikalische Verbindung kann auch durch ein Werkzeug wie Laser, Locher, eine Stromoder sonstige Wärmequelle zerstört werden.

Besonders vorteilhaft ist es die physikalische Verbindung bei der Montage des Elektronikgehäuses an das Stellantriebsgehäuse oder bei der Montage des ersten Gehäuseteils auf das zweite Gehäuseteil oder durch Montage des Gegensteckers in einen Stecker des Stellantriebs oder durch Montage eines Zusatzteils an den Stellantrieb zu unterbrechen.

Die Erfindung wird nachfolgend anhand der Zeichnung näher erläutert. Es zeigen:

Fig. 1    eine Darstellung der Zuordnung zwischen einem Vorsprung und einer Aussparung,

Fig. 2    ein Stellantriebsgehäuseteil mit einer Leiterplatte,

Fig. 3    ein Zusatzteil und eine Leiterplatte mit physikalischen Verbindungen,

Fig. 4    einen Stecker und Gegenstecker in einem Vormontagezustand,

Fig. 5    ein Elektronikgehäuse und ein Stellantriebsgehäuse,

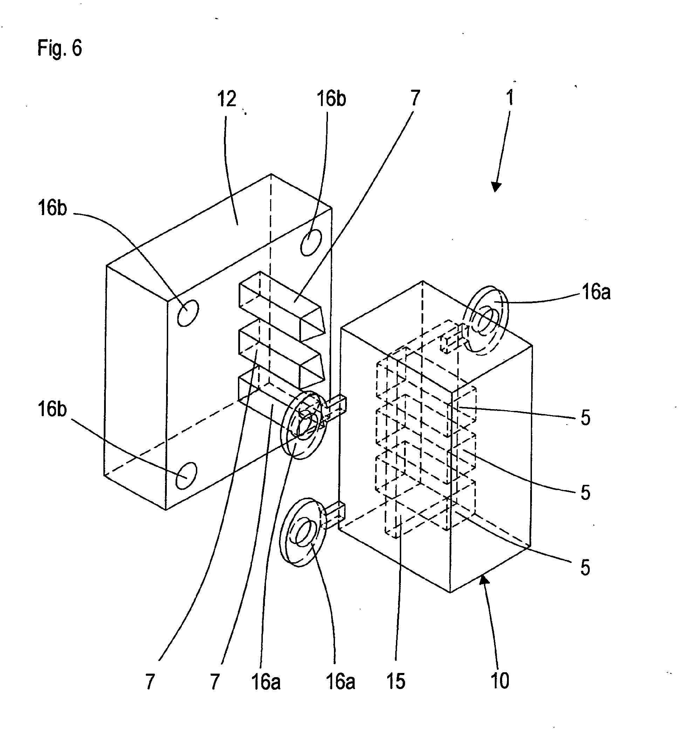

Fig. 6    eine Antriebseinheit mit einer Codierung an einem Montageort und

Fig. 7    einen am Stellglied montierten Stellantrieb.

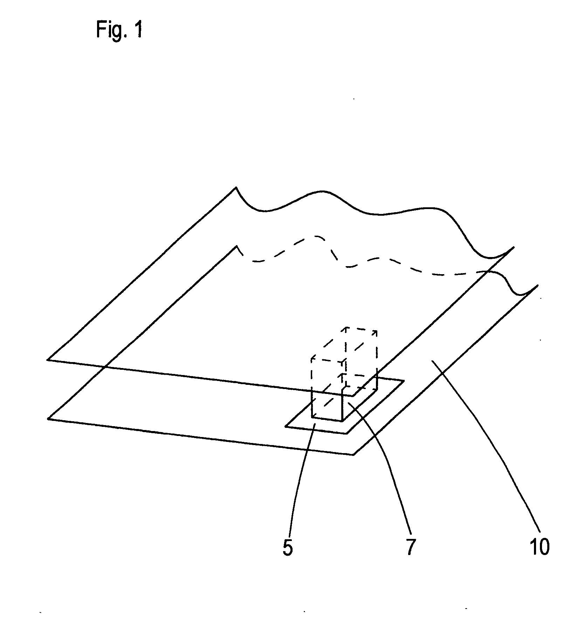

Fig. 1 zeigt eine Darstellung der Zuordnung zwischen einem Vorsprung und einer Aussparung, wobei die Aussparung 5 in einem Gehäuseteil 10 und der Vorsprung 7 an einem weiteren Bauteil angeordnet ist.

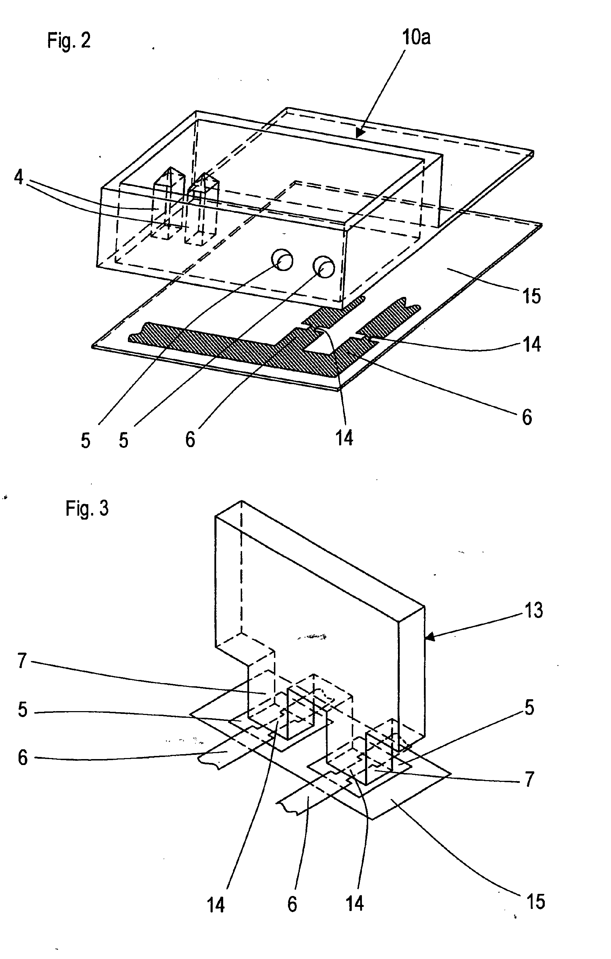

Fig. 2 zeigt ein Stellantriebsgehäuseteil 10a mit einer Leiterplatte 15, wobei das Stellantriebsgehäuseteil 10 einen Stecker 4 und Aussparungen 5 aufweist und die Leiterplatte physikalische Verbindungen 6 in Form von Kupferleiterbahnen, die Sollbruchstellen 14 trägt. Die Aussparungen 5 dienen dazu die physikalischen Verbindungen 6 zugänglich zu machen für ein Werkzeug oder ein weiteres bleibend zu montierendes Bauteil.

Fig. 3 zeigt ein Zusatzteil 13 mit Vorsprüngen 7, die physikalischen Verbindungen 6 zugeordnet sind und geeignet sind diese zu zerstören und damit zu unterbrechen. Die physikalischen Verbindungen 6 werden von einer Leiterplatte 15 getragen, die mit Aussparungen 5 versehen ist, die eine Zerstörung der physikalischen Verbindungen 6 ermöglicht, indem die physikalischen Verbindungen 6 an dieser Stelle nicht abgestützt sind und auf diese Weise dem Zusatzteil 13 kaum einen Widerstand entgegensetzen. Um die Zerstörung weiter zu erleichtern sind Sollbruchstellen 14 vorgesehen.

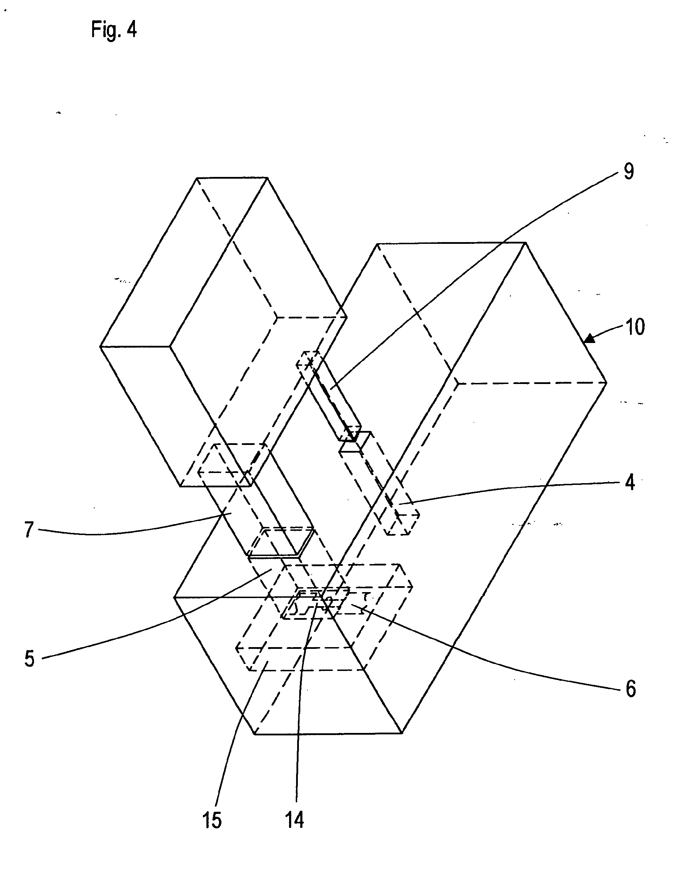

Fig. 4 zeigt einen Stecker 4 und Gegenstecker 9 in einem Vormontagezustand, wobei der Stecker 4 Bestandteil eines Stellantriebsgehäuses 10 ist und einem Vorsprung 7 aufweist, der einer Aussparung 5 zugeordnet ist. In Steckrichtung an die Aussparung 5 anschließend befindet sich eine zerstörbare physikalische Verbindung 6 mit einer Sollbruchstelle 14 auf einer Leiterplatte 15. Die physikalischen Verbindungen 6 können alternativ auch vom Stellantriebsgehäuse 10 getragen werden.

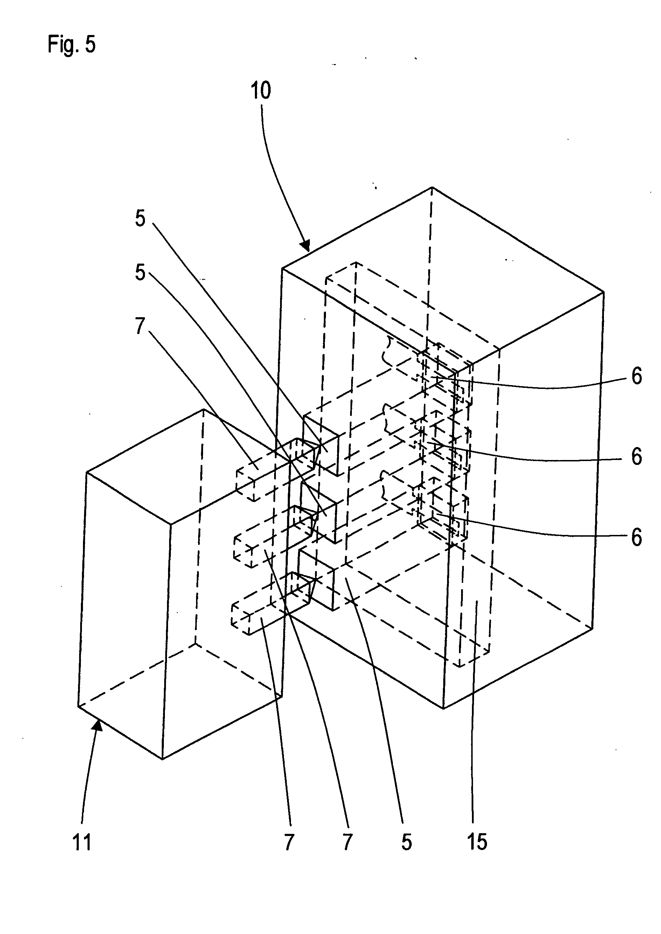

Fig. 5 zeigt ein Stellantriebsgehäuse 10 mit Aussparungen 5 und einer Leiterplatte 15 mit physikalischen Verbindungen 6, die an die Aussparungen 5 anschließen, einem Elektronikgehäuse 11, das mit Vorsprüngen 7 versehen ist, die den Aussparungen 5 zugeordnet sind. Die Darstellung zeigt einen Vormontagezustand. Wird das Elektronikgehäuse 11 an das Stellantriebsgehäuse 10 montiert, greifen die Vorsprünge 7 in die Aussparungen 5 ein und zerstören die physikalischen Verbindungen 6.

Fig .6 zeigt einen vereinfachten Stellantrieb 1 mit einem Stellantriebsgehäuse 10, in dem Aussparungen 5 vorgesehen sind, die Vorsprüngen 7 zugeordnet sind, die an einem Träger 12 angeordnet und vorzugsweise mit diesem einstückig sind. Der Stellantrieb 1 ist über Befestigungsmittel 16a, 16b am Träger 12 montierbar. Hier wird die Codierung erst bei der Montage des Stellantriebs 1 an den Träger am Montageort hergestellt, wobei wieder physikalische Verbindungen 6 auf einer Leiterplatte 15 zerstört werden.

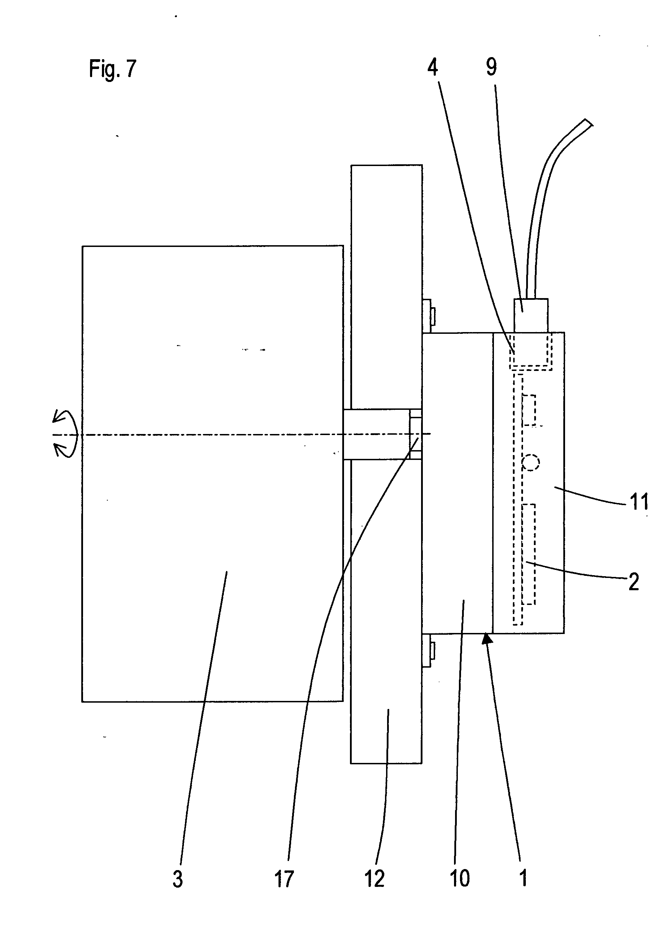

Fig. 7 zeigt einen Stellantrieb 1, der mit einer dem Stellantrieb 1 zugeordneten Ansteuerelektronik 2 in einem Elektronikgehäuse 11 zu einer Baueinheit zusammengefasst ist. Der Stellantrieb 1 ist an einem Träger 12 montiert und über eine Ausgangswelle 17 mit dem Stellglied 3 verbunden. Das Stellglied 3 ist hier eine Klappe einer Kfz-Klimaanlage. Die Ansteuerelektronik 2 und damit der Stellantrieb 1 sind über einen Stecker 4 und Gegenstecker 9 an einen Klima-Bus angeschlossen, von dem mehrere Stellantriebe angesteuert werden.

Bezugszeichenliste

| | |
|---|---|
| 1 | Stellantrieb |
| 2 | Ansteuerelektronik |
| 3 | Stellglied |
| 4 | Stecker |
| 5 | Aussparung |
| 6 | Physikalische Verbindung |
| 7 | Vorsprung |
| 8 | Aufnahme |
| 9 | Gegenstecker |
| 10 | Stellantriebsgehäuse |
| 10a | erstes Gehäuseteil |
| 10b | zweites Gehäuseteil |
| 11 | Elektronikgehäuse |
| 12 | Träger |
| 13 | Zusatzteil |
| 14 | Sollbruchstelle |
| 15 | Leiterplatte |
| 16a | Befestigungsmittel |
| 16b | Befestigungsmittel |
| 17 | Ausgangswelle |

**Patentansprüche**

1. Adressierung eines busgesteuerten Stellantriebs (1), der mit einer dem Stellantrieb (1) zugeordneten Ansteuerelektronik (2) zu einer Baueinheit zusammengefasst ist, und im Verbund mit weiteren busgesteuerten Stellantrieben (1) über ein gemeinsames Bus-Protokoll kommunizieren kann, wobei in der Ansteuerelektronik (2) ein Vergleich zwischen einer durch das Bus-Protokoll übermittelten Bus-Adresse mit einer hardwaremäßigen Voreinstellung möglich ist, wodurch eine Adresserkennung gegeben ist, **dadurch gekennzeichnet, dass** in einem Gehäuseteil (10, 10a, 10b) und/oder Stecker (4) der Baueinheit zumindest eine Aussparung (5) vorgesehen ist, die zumindest eine zerstörbare physikalische Verbindung (6) zugänglich macht und/oder die Zerstörung ermöglicht.

2. Adressierung nach Anspruch 1, **dadurch gekennzeichnet, dass** der Aussparung (5) zumindest ein Vorsprung (7) zugeordnet ist, mit dessen Hilfe die physikalische Verbindung (6) zerstörbar ist.

3. Adressierung nach Anspruch 2, **dadurch gekennzeichnet, dass** der Vorsprung (7) Bestandteil eines Gegensteckers (9) ist und die physikalischen Verbindung (6) in Steckrichtung des Gegensteckers (9) und des Vorsprungs (7) angeordnet ist.

4. Adressierung nach Anspruch 2 **dadurch gekennzeichnet, dass** der Vorsprung (7) in einem ersten Gehäuseteil (10a) der Baueinheit und die Aussparung (5) in dem zweiten Gehäuseteil (10b) angeordnet ist oder umgekehrt.

5. Adressierung nach Anspruch 2, **dadurch gekennzeichnet, dass** die Baueinheit aus einem Elektronikgehäuse (11) und einem Stellantriebsgehäuse (10) besteht, wobei der Vorsprung (7) Bestandteil des Elektronikgehäuses (11) und die Aussparung (5) Bestandteil des Stellantriebsgehäuses (10) ist oder umgekehrt.

6. Adressierung nach Anspruch 2, **dadurch gekennzeichnet, dass** der Vorsprung (7) Bestandteil eines Zusatzteils (13) ist, das zur Zerstörung der physikalischen Verbindung (6) dient.

7. Adressierung nach Anspruch 2, **dadurch gekennzeichnet, dass** der Vorsprung (7) Bestandteil eines Trägers (12) ist, an den die Stellantriebseinheit montierbar ist.

8. Adressierung nach zumindest einem der vorangehenden Ansprüche, **dadurch gekennzeichnet, dass** die physikalische Verbindung (6) aus einem leitfähigen Material besteht.

9. Adressierung nach zumindest einem der vorangehenden Ansprüche, **dadurch gekennzeichnet, dass** die physikalische Verbindung (6) Sollbruchstellen (14) aufweist.

10. Verfahren zur Adressierung einer busgesteuerten Stellantriebseinheit nach zumindest einem der vorangehenden Ansprüchen, **dadurch gekennzeichnet, daß** die physikalische Verbindung (6) durch ein Werkzeug wie Laser, Locher, Stromquelle, Wärmequelle oder durch den Vorsprung (7) unterbrochen wird.

11. Verfahren zur Adressierung einer busgesteuerten Stellantriebseinheit nach zumindest einem der vorangehenden Ansprüchen, **dadurch gekennzeichnet, dass** die physikalische Verbindung (6) bei der Montage des Elektronikgehäuses an das Stellantriebsgehäuse oder bei der Montage des ersten Gehäuseteils (10a) auf das zweite Gehäuseteil (10b) oder durch Montage des Gegensteckers (9) in einen Stecker (4) des Stellantriebs (1) oder durch Montage eines Zusatzteils (13) an den Stellantrieb (1) unterbrochen wird.

Fig. 1

5            7            10

Fig. 2

Fig. 3

Fig. 4

# Fig. 5

Fig. 6

12   16b   7   1

16b

16b

16a

5

5

5

7   7   16a   16a   15   10

Fig. 7